# EUROPÄISCHE PATENTSCHRIFT

(11) **EP 0 514 412 B1**
(45) Veröffentlichungstag und Bekanntmachung des Hinweises auf die Patenterteilung: **10.05.1995**
(21) Anmeldenummer: 91903264.9
(22) Anmeldetag: 08.02.1991
(51) Int. Cl.: B01D 46/06, B01D 46/52, B01D 29/07

(54) **FILTEREINSATZ**
FILTER INSERT
GARNITURE DE FILTRE

(30) Priorität: 08.02.1990 DE 4004079
(43) Veröffentlichungstag der Anmeldung: 25.11.1992
(73) Patentinhaber: Firma Carl Freudenberg, 69469 Weinheim (DE)
(72) Erfinder: Lippold,Hans-Joachim, Dr., D-14089 Berlin (DE)
(86) Internationale Anmeldenummer: DE9100111
(87) Internationale Veröffentlichungsnummer: WO9112068

(56) Entgegenhaltungen:
- DE-A- 1 930 715
- DE-A- 2 922 237

## Beschreibung

Die Erfindung betrifft einen Filtereinsatz der im Oberbegriff des Anspruchs 1 angegebenen Art.

Ein aus der US-A-3 531 920 (entspricht DE-A-1 930 715) bekannter Filtereinsatz hat quaderförmige Gestalt und besteht aus einem Filterelement, das im Zick-Zack gefaltet ist. Aus Faltenwänden treten parallel zueinander verlaufende Vorsprünge hervor, wobei die Vorsprünge an beiden Seiten der Faltwände aus der Ebene der Faltenwände herausragen. Jeder der sich senkrecht zu den Falze bildenden Kanten der Zick-Zack-Faltung erstreckenden Vorsprünge weist eine in Bewegungsrichtung des Mediums allmählich zunehmende bzw. abnehmende Höhe und in Richtung der zunehmenden Höhe zunehmende Breite auf. Jeweils zwei innerhalb der Faltenwand benachbarte Vorsprünge erstrecken sich in bezug auf die Ebene der Faltenwand in einander entgegengesetzte Richtungen, sind also erhaben bzw. vertieft geprägt.

Die Vorsprünge sind dabei so angeordnet, daß jedem erhabenen Vorsprung in der Faltenwand ein entsprechender ebenfalls erhaben geprägter Vorsprung in der benachbarten Faltenwand zugeordnet ist, derart, daß die einander zugeordneten Vorsprünge durch die Zick-Zack-Faltung aufeinander zu liegen kommen und sich im Bereich der Berührungsflächen abstützen.

Auf diese Weise wird zwischen den benachbarten Faltenwänden ein in Bewegungsrichtung des Mediums gleichmäßig abnehmender, bzw. nach Durchtritt des Mediums durch die Wandung zunehmender, Abstand gesichert.

Nachteilig ist dabei, daß in Bewegungsrichtung des Mediums die Breite der Vorsprünge zu- bzw. abnimmt, so daß das zu filternde Medium in seiner Strömungsrichtung seitlich abgelenkt wird. Dadurch ist der strömungswiderstand vergrößert und eine stärkere Förderleistung für das zu filternde Medium erforderlich. Durch die zunehmende Breite der Vorsprünge wird weiterhin die für den Durchtritt des zu filternden Mediums im Bereich der Wandung zur Verfügung stehende Fläche verringert.

Weiterhin nimmt die Breite eines zwischen zwei benachbarten Vorsprüngen für das Medium gebildeten Kanals in Bewegungsrichtung des Mediums zu. Durch die damit verbundene Querschnittsänderung erhöht sich der Strömungswiderstand zusätzlich in unerwünschter Weise. Um die Filterung großer Mengen eines Mediums wirtschaftlich zu ermöglichen, soll die für den Filtervorgang bereitzustellende Energie möglichst gering sein, zumal die entsprechenden Antriebsmittel mit zunehmender Leistung auch vermehrte Geräusche verursachen.

Aus DE-A-29 22 237 ist ein Filtereinsatz mit zylindrischer Grundform bekannt, der ebenfalls Faltenwände mit sich aneinanderstützenden Vorsprüngen aufweist. Bei diesem Filtereinsatz haben die Vorsprünge konstante Breite, sodaß die Strömungsverhältnisse hier günstiger sind.

Die Gestaltung und Anordnung der Vorsprünge ist jedoch auf einen zylindrischen Filtereinsatz zugeschnitten und bei einem quaderförmigen Einsatz nicht anwendbar.

Zudem ist die Faltung auch bei dieser Lösung - ebenso wie bei US-A-3 531 920 - derart ausgebildet, daß in den Falten des Filtermaterials wenig Platz für ausgefilterte Partikel zur Verfügung steht, sodaß das Filter sich alsbald "zusetzt".

Der Erfindung liegt die Aufgabe zugrunde, bei einem Filtereinsatz der eingangs genannten Gattung den Strömungswiderstand möglichst weitgehend zu vermindern, wobei bei einfacher Konstruktion eine hohe Stabilität der Anordnung gewährleistet sein soll.

Diese Aufgabe wird mit den kennzeichnenden Merkmalen des Anspruchs 1 gelöst.

Der Erfindung liegt der Gedanke zugrunde, zum einen die strömungsgünstige Grundform der Vorsprünge in den Faltenwänden des bekannten zylindrischen Filtereinsatzes durch eine neuartige Anordnung der Vorsprünge auf einen quaderförmigen Einsatz zu übertragen und gleichzeitig durch eine neuartige Faltung des Filtermaterials zwischen den Faltenwänden mehr Platz für ausgefilterte Partikel zu schaffen.

Der Filterungsvorgang wird gleichmäßiger, und trotz höherem Abscheidegrad ist die Lebensdauer der Filter erhöht.

Durch das Vorsehen zweier Faltenkanten mit einem Abstand dazwischen wird die Druckverteilung zusätzlich homogenisiert, insbesondere kann die Höhe der Faltenwand damit größer als bisher ausgelegt werden, ohne daß nachteilige hohe Druckunterschiede beim Durchtritt des zu filternden Mediums im Bereich der Durchtrittsfläche des Filtermaterials entstehen. Diese geringen Druckunterschiede sind insbesondere auch auf die geringe Materialanhäufung im Bereich der Faltenkante bzw. auf die Möglichkeit zurückzuführen, daß dem zu filternden Medium in diesem Bereich eine größere Filterfläche zur Verfügung steht. Weiterhin bleibt die für den Filtervorgang günstige laminare Strömung erhalten. Die größere Höhe der Faltenwände erweitert nicht nur die Filterfläche, sondern verbessert auch die Filtereigenschaften insgesamt, hierbei insbesondere den Abscheidegrad. Auch ergibt sich durch die erfindungsgemäße Ausbildung der Faltenkanten mit der größeren Höhe ein wesentlich günstigeres Verhältnis der Druckdifferenz zur Faltenhöhe. Daraus resultieren größere Stabilität und eine erhöhte Lebensdauer des jeweiligen Filtereinsatzes.

In einer bevorzugten Ausführung ist die Breite größer als die Höhe der maximalen Erhebungen der Vorsprüge, bezogen auf die Ebene der Faltenwand. Das Verhältnis der Druckdifferenz zur Faltenhöhe hat sich bei einem solchen geometrischen Verhältnis als besonders günstig erwiesen.

Der Bereich des Übergangs von demjenigen Ende des Vorsprungs, das den größten Abstand bezogen auf die Ebene der Faltenwand aufweist, in die Ebene der Faltenwand ist strömungsgünstig ausgebildet, wobei ein Bereich größerer Steigung zwischen Bereichen geringerer Steigung angeordnet ist. Zusätzlich gehen insbesondere die Bereiche geringerer Steigung kontinuierlich in die angrenzenden ebenen Bereiche über. Die Druckdifferenzen im Durchtrittsbereich des Filtermaterials werden für das zu filternde Medium kleiner und die Strömung angenähert laminar.

Bei einer vorteilhaften Weiterbildung ist die Breite der Kanäle im Verhältnis zu den durch die Vorsprünge gebildeten Stegen groß ausgebildet, so daß ein günstiges Verhältnis der wirksamen Filterfläche zur Gesamtoberfläche der Faltenwände erreicht werden kann.

Mit dem beschriebenen Aufbau lassen sich quaderförmige Filtereinsätze als Einwegartikel erzeugen, welche kostengünstig herstellbar sind und eine lange Standzeit aufweisen.

Bei vorteilhaften Weiterbildungen der Erfindung ist insbesondere eine die Vorsprünge aussteifende, aushärtbare Beschichtung und/oder Tränkung vorgesehen, welche die Steifigkeit der Anordnung zusätzlich heraufsetzt, wobei sich die Beschichtung oder Tränkung auf die Seitenwandungen der Vorsprünge erstreckt, da diese die Faltenwände aussteifende "Rippen" bilden.

Insbesondere erweist es sich als günstig, die Dicke der Beschichtung bzw. die Intensität der Tränkung mit dem Abstand der Erhebung der Vorsprünge, bezogen auf die Ebene der Faltenwand, zu verstärken, da dadurch, die durch die Prägung entstandenen, sich verjüngenden Wandungen der Vorsprünge entsprechend verfestigt und stabilisiert werden. Vorzugsweise besteht die Beschichtung bzw. Tränkung aus einem aushärtbaren Klebstoffmaterial.

Andere vorteilhafte Weiterbildungen der Erfindungen sind in den Unteransprüchen gekennzeichnet bzw. werden nachstehend zusammen mit der Beschreibung der bevorzugten Ausführungen der Erfindung anhand der Figuren näher dargestellt. Es zeigen:
Figur 1 eine perspektivische Ansicht eines Teils des Ausführungsbeispiels des erfindungsgemäßen Filtermaterials,
Figur 2 einen Ausschnitt A als vergrößerte Teildarstellung der Ausführungsform von Figur 1 mit zusätzlicher Klebebeschichtung der Vorsprünge,
Figur 3 eine perspektivische Ansicht eines Teils des Filterelements in ungefaltetem Zustand,
Figur 4 eine perspektivische Draufsicht des zu einem Filtereinsatz gefalteten Ausführungsbeispiels,
Figur 5 einen Querschnitt durch zwei aneinander anliegende Vorsprünge von Faltenwänden, die miteinander verklebt sind, in vergrößerter Darstellung, sowie
Figur 5a einen Querschnitt durch einer zweiten Ausführungsform eines Vorsprungs gemäß Figur 5.

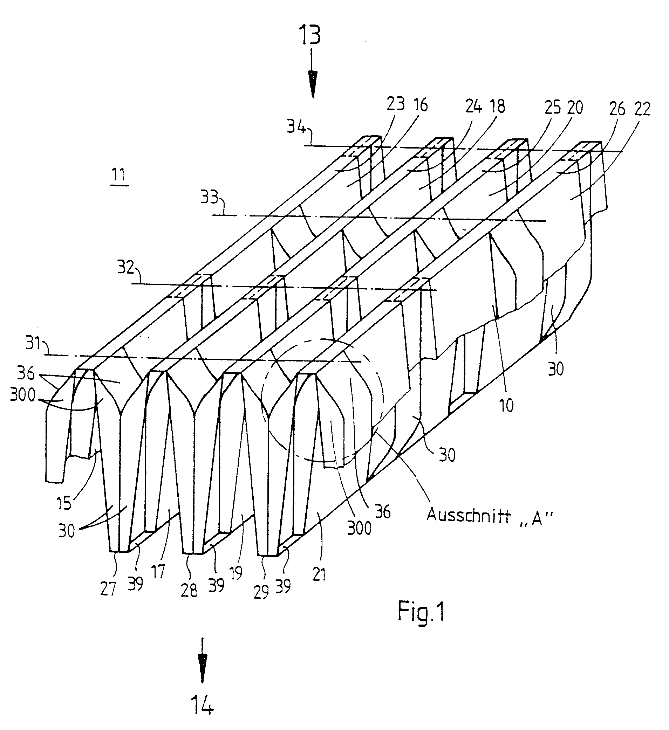

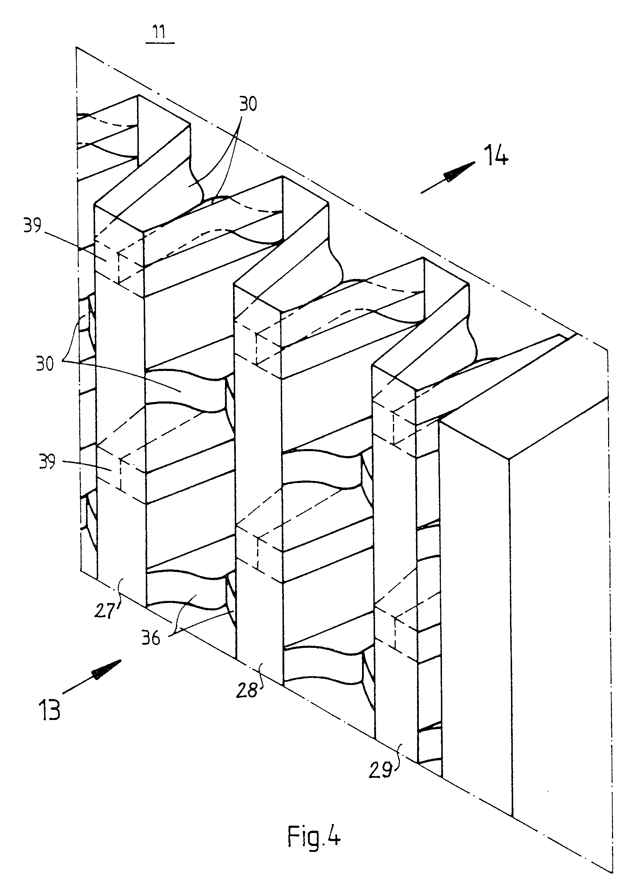

In den Figuren 1 und 4 ist jeweils ein Ausschnitt eines Filtermaterials 10, bestehend aus einem Filtervlies, dargestellt, das durch Zick-Zack-Faltung zu einem im wesentlichen quaderförmigen Filtereinsatz 11 geformt ist. Bei diesem Filtervlies handelt es sich insbesondere um ein Schwebstoffvlies. Grundsätzlich ist jedes Filtermaterial geeignet, das sich entsprechendend formen läßt.

Der quaderförmige Filtereinsatz 11 paßt in bekannter Weise in einen Rahmen, der den Filtereinsatz zusätzlich stabilisiert. Der Filtereinsatz kann - je nach Anwendungsfall - gegebenenfalls auch ohne Rahmen ausgebildet sein, wobei die Außenabmessungen an die für den Filtereinsatz vorgesehene Ausnehmung dem entsprechenden Aufnahmeteil angepaßt sind. Der Filtereinsatz wird von einer Eintrittsseite 13 durch das zu filternde Medium angeströmt, von wo das Strömungsmittel durch das Filtermaterial in Richtung einer gegenüberliegenden Austrittsseite 14 gelangt, von der es über eine geeignete Abfuhrleitung abgezogen wird oder frei abströmt.

Das Filtermaterial 10, in Figur 1, ist zick-zackförmig gefaltet, wobei eine Anzahl von Faltenwänden 15 bis 22 jeweils eine Falte bilden. Die Faltenwände 15 und 16 sind über einen die Faltenkanten eben ausbildenden Zwischenbereich auf der Eintritteseite 13, die angeströmt wird, miteinander verbunden. Ebenso sind die Faltenwände 17 und 18 durch solch einen Zwischenbereich 24, die Faltenwände 19 und 20 durch solch einen Zwischenbereich 25 und die Faltenwände 21 und 22 durch solch einen Zwischenbereich 26 miteinander verbunden.

Die Bereiche 27, 28 und 29 an der Austrittsseite 14 sind ebenso ausgeführt, wobei die Faltenwände 16 und 17 durch den Bereich 27, die Faltenwände 18 und 19 durch den Bereich 28 und die Faltenwände 20 und 21 durch den Bereich 29 miteinander verbunden sind. Diese Art der Faltung vergrößert die Filtereinsatzoberfläche, homogenisiert die Druckverteilung und setzt den Abscheidegrad des Filtereinsatzes 11 herauf. Diese Verbesserung resultiert aus einer Optimierung der Geschwindigkeitsverteilung, einer Senkung der Druckdifferenz und einer Verminderung der Materialanhäufung im Bereich der Faltenkanten. Dadurch können die Faltenwände höher als die herkömmlichen Filter sein. Die Lebensdauer solcher Filter ist auch länger.

Die Faltenwände 15 bis 22 weisen materialeinheitliche Vorsprünge 30 auf, die durch Prägung des Filtermateriales (Schwebstoffiltervlieses) ausgebildet wurden. Die Vorsprünge 30 weisen in Bewegungsrichtung des zu filternden Mediums eine konstante Breite auf. Die Seitenwandungen 300 der Vorsprünge 30 erstrecken sich senkrecht zu den die Faltenwände 15 bis 22 miteinander verbindenden verbreiterten Faltenkanten 23 bis 29. Dabei weisen die Vorsprünge 30, ausgehend von den verbreiterten Faltenkanten 27 bis 29 in Richtung auf die verbreiterten Faltenkanten 23 bis 26, eine zunehmende Höhe bezogen auf die Ebene der Faltenwände 15 bis 22 auf.

Der Berührungsbereich ist in Form einer rechteckigen Berührungsfläche der Vorsprünge 30 ausgebildet. Dadurch erhöht sich die Stabilität des Filtereinsatzes. Durch die Prägung der Faltenwände 15 bis 22 hat sich die Oberfläche des Filterelements entsprechend vergrößert, und der zusätzliche benötigte Werkstoff wurde aus der zu prägenden Faltenwand durch den Prägevorgang gezogen. Dadurch sind die Wandungen der Vorsprünge 30 entsprechend dünner ausgebildet. Der aufgetragene Kleber verfestigt gerade diesen Bereich zusätzlich, so daß die durch die Verformung eingetretene Materialschwächung beseitigt bzw., je nach Kleberauftrag, überkompensiert ist.

Die Vorsprünge 30 benachbarter Faltenwände 15 bis 22 liegen zur Abstandssicherung und Aussteifung aneinander an. Dabei sind beispielsweise die aneinander anliegenden Vorsprünge 30 zweier über einer verbreiterten Faltenkante 27 verbundenen Faltenwände 16 und 17 in Richtung auf den jeweils gegenüberliegenden verbreiterten Faltenkante 23 und 24 in ihrer Höhe, bezogen auf die jeweilige Faltenwand 16 oder 17, zunehmend ausgebildet, so daß zwischen diesen Faltenwänden 16 und 17 ein in Bewegungsrichtung des Mediums abnehmender bzw. nach Durchtritt des Mediums durch die jeweilige Faltenwand 16 oder 17 anwachsender Abstand festliegt. Auf diese Weise ist sichergestellt, daß bei insgesamt laminarer Strömung die gesamte Fläche des Filtermaterials gleichmäßig ausgenutzt wird und entlang des Transportwegs des Mediums keine Druckschwankungen auftreten, welche den Strömungswiderstand in unerwünschter Weise vergrößern.

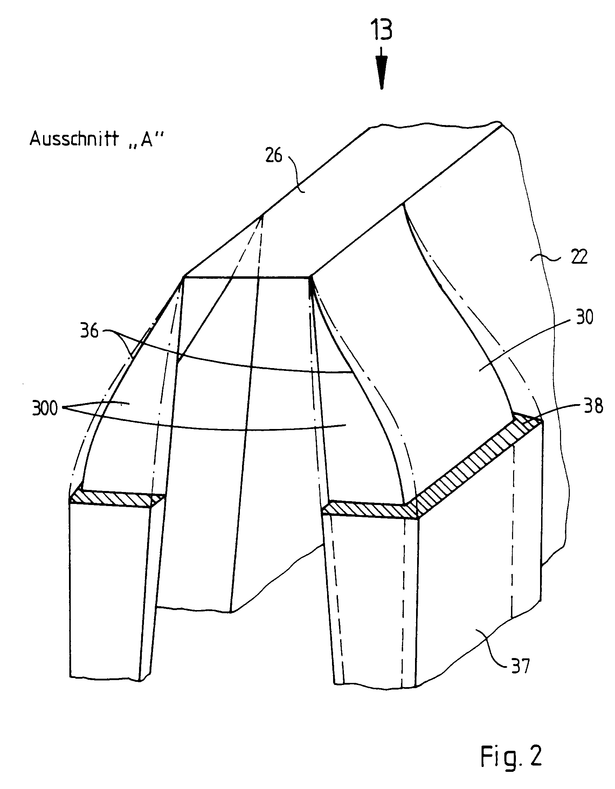

Die Vorsprünge 30 sind entlang von Geraden 31 bis 34, die zueinander gleichen Abstand aufweisen, angeordnet. Dabei treten die Vorsprünge derart abwechselnd aus den Seiten 13 und 14 hervor, daß die Vorsprünge 30 auf den Geraden 31 und 33 aus der Eintrittsseite 13 hervortreten und die weiteren Vorsprünge 30, die entlang der Geraden 32 und 34 angeordnet sind, aus der Austrittsseite 14 hervortreten. Durch diese abwechselnde Anordnung der Vorsprünge 30 wird die Stabilität erhöht, da sowohl auf der Eintrittsseite 13 als auch auf der Austrittsseite 14 die Faltenwände in einem zueinander vorbestimmten Abstand gehalten werden. Die Vorsprünge 30 gehen an beiden Enden in die Faltenwand wieder über. Der Stirnseitenbereich 36 am Ende des Vorsprungs 30, wo dieser die größte Höhe, bezogen auf die Ebene der Faltenwand 22, aufweist, wird ausführlich anhand der Figur 2 beschrieben. Der andere Stirnseitenbereich 39 am Ende des Vorsprungs 30, wo dieser die geringste Höhe, bezogen auf die Ebene der Faltenwand 21, aufweist, kann entweder als Aussparung oder aus Filtermaterial gebildete Fläche ausgebildet sein. In diesem Fall ist der Stirnseitenbereich 39 als aus Filtermaterial gebildete senkrechte Fläche dargestellt. Diese liegt im gefalteten Zustand an dem Zwischenbereich 29 an. Der Vorsprung 30 der benachbarten Faltenwand 20 ist auch im Stirnseitenbereich 39 als senkrechte, aus Filtermaterialgebildete Fläche ausgebildet und liegt auch am Zwischenbereich 29 an. Der Stirnseitenbereich 39 in Form einer Aussparung oder einer aus Filtermaterialgebildeten Fläche kann aber auch abgeschrägt oder verrundet sein

Der in Figur 2 dargestellte vergrößerte, modifizierte Ausschnitt A aus Figur 1 stellt einen zweiten Stirnseitenbereich des Vorsprungs 30 oder - anders formuliert - einen Übergangsbereich 36 vom Zwischenbereich 26 zu dem aus der Faltenwand 22 hervortretenden Vorsprung 30 dar.

Der Bereich des Übergangs 36 erstreckt sich von demjenigen Ende des Vorsprungs 30, wo diese die größte Höhe bezogen auf die Ebene der Faltenwand, aufweist, in Richtung auf die Faltenkante (Zwischenbereich) 35 in die Ebene der Faltenwand 22. Dabei weist der Übergangsbereich 36 einen Bereich größerer Steigung auf, der zwischen zwei Bereichen geringerer Steigung angeordnet ist. Die Bereiche geringerer Steigung gehen kontinuierlich in angrenzende ebene Bereiche über. Eine rechteckige Fläche 37 ist ein Teil der Berührungsfläche benachbarter aneinander anliegender Vorsprünge 30 der Faltenwände. Die Übergangsbereiche 36 sind strömungsgünstig ausgebildet, so daß der Strömungswiderstand, der u.a. durch die Vorsprünge hervorgerufen wird, sich verringert.

Über dem Vorsprung 30 und dem zweiten Stirnseiten- oder Übergangsbereich 36 ist eine den Vorsprung 30 und den Übergangsbereich 36 aussteifende, aushärtbare Klebebeschichtung 38 angeordnet, die am Ende des Vorsprungs 30 in Richtung auf die Faltenkante 35 aufgebrochen dargestellt ist, um die Ausbildung und Anordnung der einzelnen konstruktiven Elemente besser sichtbar zu machen. Die Klebebeschichtung 38 kann wahlweise auch als Tränkung 38 ausgebildet sein.

Die Klebebeschichtung 38 erstreckt sich auch auf die Seitenwandungen 300 der Vorsprünge 30, einschließlich des Übergangsbereichs 36. Die örtliche Dicke der Klebebeschichtung 38 nimmt dabei mit dem Abstand der Erhebung der Vorsprünge 30 bezogen auf die der Faltenwand 22 zu. Dadurch wird die durch die Prägung verursachte abnehmende Wanddicke der Vorsprünge 30 und damit auch die abnehmende Stabilität der Vorsprünge 30 durch die aushärtbare und die Vorsprünge aussteifende Klebebeschichtung 38 ausgeglichen. Die Vorsprünge erhalten durch die Klebebeschichtung 38 die für die beim Filtriervorgang auftretenden Kräfte benötigte Festigkeit und Stabilität.

Durch die aufgebrachte Klebebeschichtung 38 sind die benachbarten, aneinander angrenzenden Vorsprünge 30 miteinander verklebt. Dadurch wird der Filtereinsatz 11 stabilisiert und hält gleichzeitig seine Quaderform selbsttragend, ohne zusätzlichen Rahmen. Dies vereinfacht den Einbau der Filtereinsätze 11 in die bekannten Filtergehäuse erheblich.

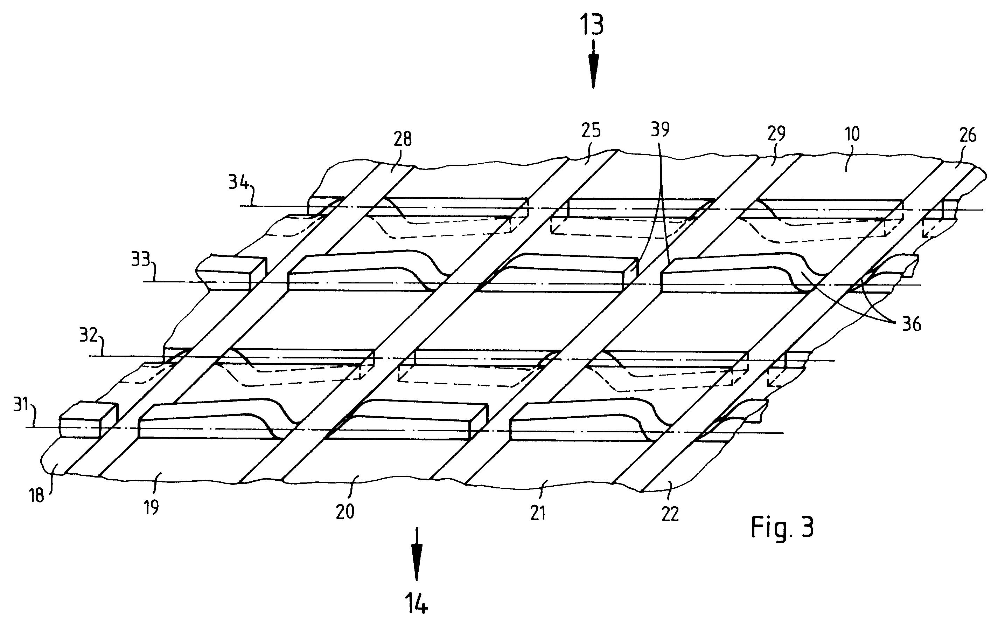

In Figur 3 ist in einer perspektivischen Ansicht ein Teil des Filtermaterials 10 in nicht gefaltetem Zustand dargestellt.

Es sind die abwechselnd aus der Eintrittsseite 13 und Austrittsseite 14 hervortretenden Vorsprünge 30 erkennbar.

Die Vorsprünge 30 werden mittels zweier beidseitig des Filtermaterials 10 angeordneter Walzen, die hier nicht sichtbar sind, eingeprägt. Das Filtermaterial 10 läuft dabei folienartig durch die Prägewalzen. Es entstehen dadurch auf den Geraden 31 bis 34 fortlaufend eingeprägte Vorsprünge 30 mit den entsprechenden Übergangsbereichen 36 und 39 und den trapezartig verbreiterten Faltenkanten 24 bis 27. Anschließend läuft das Filterelement 10 wiederum durch beidseitig des Filtermaterials 10 angeordnete Walzen, die nicht sichtbar sind, die Hohlformen an ihren Walzwandungen aufweisen, die der Form der eingeprägten Vorsprünge 30 angepaßt sind. Die aushärtbare Klebebeschichtung 38 wird durch den Walzvorgang auf die Vorsprünge 30 und deren Seitenwandungen 300 aufgetragen. Durch die Walzenprägung der Vorsprünge 30 werden die Filterelemente 10 kostengünstig hergestellt und auch das Aufbringung der aushärtbaren Klebebeschichtung 38 erfolgt durch ein fertigungstechnisch vorteilhaftes Aufwalzen.

In Figur 4 ist ein Filtereinsatz 11 im Ausschnitt dargestellt. Hinter den Zwischenbereichen 27, 28 und 29 sind die Übergangsbereiche 39 der Vorsprünge 30 gestrichelt zu erkennen. Die Zwischenbereiche sind so bemessen, daß sie jeweils zwei Stirnseitenbereiche 39 der Vorsprünge 30 im gefaltetem Zustand aufnehmen können. Die Übergangsbereiche 36 der auf der Eintrittsseite 13 hervortretenden Vorsprünge 30 gehen strömungsgünstig zu den Zwischenbereichen hin in die Ebene der Faltenwände über. Mit dieser Ausbildung der Vorsprünge 30 weist der Filtereinsatz 11 einen geringen Strömungswiderstand auf und ist von einer hohen Stabilität.

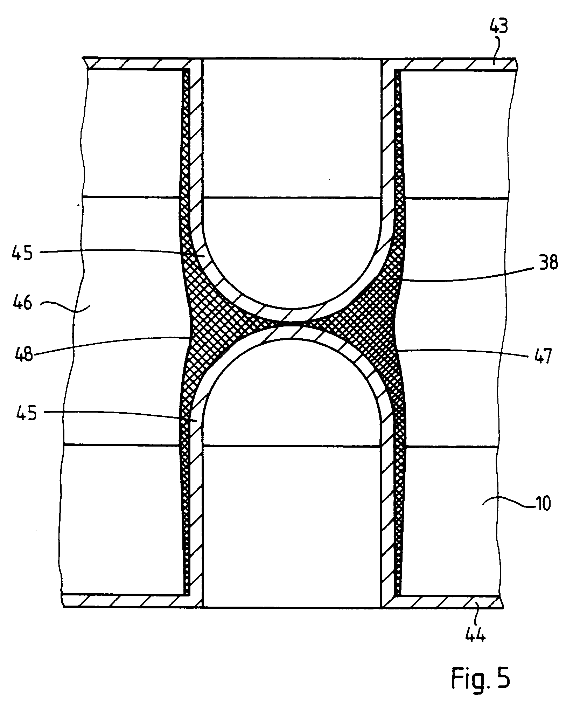

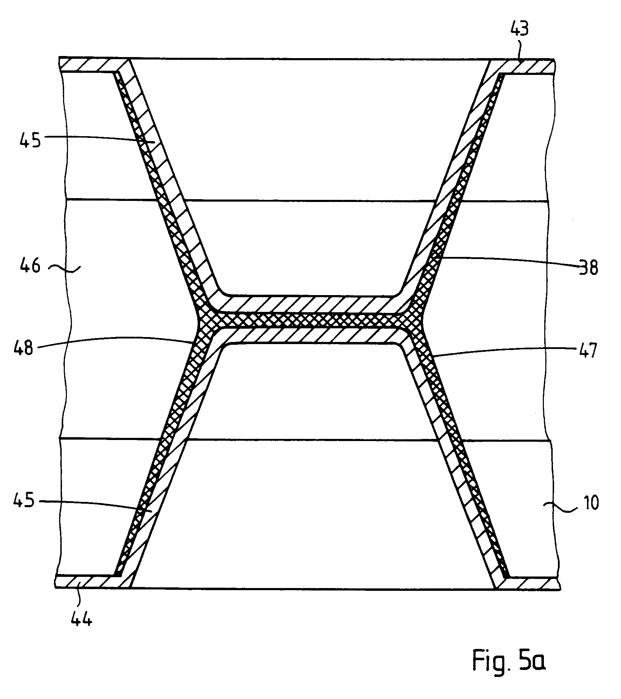

In den Figuren 5 bis 5a sind zwei verschiedene Ausführungsformen zweier aneinander anliegende Vorsprünge 45 im Querschnitt vergrößert dargestellt, die in Faltenwände 43 und 44 eingeprägt sind. Die Vorsprünge 45 sind ausgehend von einer verbreiterten Faltenkante 46 in Richtung auf die, hier nicht sichtbaren, gegenüberliegenden verbreiterten Faltenkante mit zunehmender Höhe in bezug auf die jeweilige Ebene der Faltenwände 43 und 44 ausgebildet. Die Breite der Vorsprünge 45 ist konstant. Die Vorsprünge 45 weisen im wesentlichen die Eigenschaften der bereits beschriebenen Vorsprünge 30 auf. Der Unterschied liegt jedoch in der jeweiligen Ausformung der Vorsprünge 45. In der Figur 5 ist eine runde und in der Figur 5b eine trapezartige Ausführungsform zweier aneinander anliegender Vorsprünge dargestellt. Bei der bevorzugten Ausführungsform der trapezartigen Vorsprünge 30 ist die Breite der Vorsprünge 30 größer als die Höhe der maximalen Erhebungen der Vorsprünge 30 bezogen auf die jeweilige Ebene der Faltenwände 43 und 44.

Bei beiden Ausführungsbeispielen nimmt die Dicke der Klebebeschichtung 38 mit dem Abstand der Erhebung der Vorsprünge 45, bezogen auf die jeweiligen Faltenwände 43 und 44, zu. Die Vorsprünge 45 berühren sich in der Ausbildung gemäß der Figur 5 linienförmig und gemäß der Figur 5a flächig. Bei der linienförmigen Berührung wird die Klebebeschichtung 38 mit dem Aneinanderdrücken der Vorsprünge 45 seitlich der Berührungslinie angeordnet, so daß die Klebebeschichtung 38 strömungsgünstige Flächen 47 und 48 bildet. Durch diese Ausbildung der Klebebeschichtung wird der Filtereinsatz 11 stabilisiert, so daß der Abstand zwischen den Geraden 31 bis 34, auf denen die Vorsprünge 30 bzw. 45 angeordnet sind, erhöht werden kann. Zwischen den strömungsgünstigen Flächen 47 und 48 strömt das zu filtrierende Medium laminar. Der Strömungswiderstand vermindert sich ebenfalls durch eine geringere Anzahl von Vorsprüngen, und damit vermindert sich auch die zum Absaugen bzw. Durchdrücken benötigte Energie.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

## Patentansprüche

1. Filtereinsatz (11) in quaderförmiger Ausbildung, bestehend aus einem flächigen, für das zu filternde Medium durchlässigen Material (10), angeordnet in einer Vielzahl von in zick-zack-förmiger Faltung angeordneten Faltenwänden (15 bis 22, 40, 41, 43, 44), für ein in Richtung von einem unteren Kantenbereich (13) der Faltung in Richtung auf den gegenüberliegenden oberen Kantenbereich (14) der Faltung durch den Filtereinsatz (11) hindurchtretendes, zu filterndes Medium, mit aus jeder Faltenwand (15 bis 22, 40, 41, 43, 44) in Richtung auf eine benachbarte Faltenwand vortretenden, durch Prägung erzeugten, zueinander parallelen Vorsprüngen (30, 45), deren Ausdehnung (Länge) in Richtung vom unteren zum oberen Kantenabschnitt (13, 14) größer als ihre mittlere Ausdehnung (Breite) senkrecht zu dieser Richtung ist,
wobei benachbarte Vorsprünge (30, 45) einander benachbarter Faltenwände (15 bis 22, 40, 41, 43, 44) zur Abstandssicherung und Aussteifung der Falten und des Filtereinsatzes (11) aneinander anliegen und die Höhe der aneinander anliegenden Vorsprünge (30, 45) zweier im unteren Kantenbereich (13) miteinander verbundener Faltenwände (15 bis 22, 40, 41, 43, 44) in Richtung auf den oberen Kantenbereich (14) zunimmt und die Höhe der aneinander anliegenden Vorsprünge (30, 45) im oberen Kantenbereich (14) miteinander verbundener Faltenwände (15 bis 22, 40, 41, 43, 44) gleichermaßen in Richtung auf den unteren Kantenbereich (13) zunimmt und
somit zwischen benachbarten Faltenwänden (15 bis 22, 40, 41, 43, 44) abwechselnd ein vom unteren zum oberen Kantenbereich oder in Gegenrichtung abnehmender Abstand festgelegt ist,
**dadurch gekennzeichnet,**
daß die Breite der Vorsprünge (30, 45) über die gesamte Länge im wesentlichen konstant ist und
daß jeweils im unteren und im oberen Kantenbereich (13, 14) miteinander verbundene Faltenwände (15 bis 22, 40, 41, 43, 44) über einen die Faltenkanten eben ausbildenden Zwischenbereich (23 bis 29, 35, 46) miteinander verbunden sind.

2. Filtereinsatz nach Anspruch 1, **dadurch gekennzeichnet**, daß die Stirnseiten (39) an denjenigen Enden der Vorsprünge (30, 45), wo diese die geringere Höhe bezogen auf die Ebene der Faltenwand (15 bis 22, 40, 41, 43, 44) aufweisen, Aussparungen des Filtermaterials aufweisen.

3. Filtereinsatz nach Anspruch 1, **dadurch gekennzeichnet**, daß die Stirnseiten (39) an denjenigen Enden der Vorsprünge (30,45), wo diese die geringere Höhe bezogen auf die Ebene der Faltenwand (15 bis 22, 40, 41, 43, 44) aufweisen, als mindestens teilweise aus dem Filtermaterial gebildete Flächen ausgebildet sind.

4. Filtereinsatz nach einem der Ansprüche 2 oder 3, **dadurch gekennzeichnet**, daß die Stirnseiten (39) im wesentlichen senkrecht auf der Ebene der Faltenwand (15 bis 22, 40, 41, 43, 44) stehen.

5. Filtereinsatz nach einem der Ansprüche 2 oder 3, **dadurch gekennzeichnet**, daß die Stirnseiten (39) im wesentlichen abgeschrägt oder verrundet mit einem Winkel kleiner 90° zur Ebene der Faltenwand unterhalb der Vorsprünge (30, 45) auf die Ebene der Faltenwand (15 bis 22, 40, 41, 43, 44) auftreffen.

6. Filtereinsatz nach einem der Ansprüche 1 bis 5 , **dadurch gekennzeichnet**, daß die in Richtung zu den Kantenbereichen einander benachbarten Vorsprünge (30, 45) jeweils alternierend von der gegenüberliegenden Oberfläche jeder Faltenwand (15 bis 22, 40, 41, 43, 44) aus vortreten.

7. Filtereinsatz nach einem der vorangehenden Ansprüche, **dadurch gekennzeichnet**, daß die Breite der Vorsprünge (30, 45) größer als ihre maximale Höhe, bezogen auf die Ebene der Faltenwand (15 bis 22, 40, 41, 43, 44), ist.

8. Filtereinsatz nach einem der vorangehenden Ansprüche, **dadurch gekennzeichnet**, daß die Seitenwandungen (300) der Vorsprünge (30, 45) sich senkrecht zu den die Faltenwände (15 bis 22, 40, 41, 43, 44) miteinander verbindenden Faltenkanten (23 bis 29, 35, 46) erstrecken.

9. Filtereinsatz nach einem der vorangehenden Ansprüche, **dadurch gekennzeichnet**, daß der Bereich des Übergangs (36) an denjenigen Enden der Vorsprünge (30, 45), wo diese die größere Höhe, bezogen auf die Ebene der Faltenwand (15 bis 22, 40, 41, 43, 44), aufweisen, in die Ebene der jeweiligen Faltenwand ( 15 bis 22, 40, 41, 43, 44) derart ausgebildet ist, daß ein Bereich größerer Steigung zwischen Bereichen geringerer Steigung angeordnet ist, wobei die Bereiche geringerer Steigung kontinuierlich in die angrenzenden Bereiche der Deckfläche der Vorsprünge (30, 45) bzw. der Faltenwand übergehen.

10. Filtereinsatz nach einem der vorangehenden Ansprüche, **dadurch gekennzeichnet**, daß die Vorsprünge (30, 45) einander benachbarter Faltenwände (15 bis 22, 40, 41, 43, 44) linienförmig aneinandergrenzen, wobei Klebstoff im Bereich dieser Linien aufgetragen ist.

11. Filtereinsatz nach einem der vorangehenden Ansprüche, **gekennzeichnet durch** eine die Vorsprünge (30, 45) aussteifende, aushärtbare Beschichtung (38) und/oder Tränkung (38), wobei sich die Beschichtung (38) oder Tränkung (38) insbesondere auf die Seitenwandungen (300) der Vorsprünge (30, 45) erstreckt und/oder die örtliche Dicke der Beschichtungsdicke bzw. die Intensität der Tränkung mit der Höhe der Vorsprünge (30, 45) bezogen auf die Ebene der Faltenwand (15 bis 22, 40, 41, 43, 44) zunimmt.

12. Filtereinsatz nach Anspruch 1, **dadurch gekennzeichnet**, daß die Beschichtung (38) bzw. Tränkung (38) aus einem Klebstoffmaterial besteht, wobei insbesondere die einander zugewandten Vorsprünge (30, 45) einander benachbarter Faltenwände (15 bis 22, 40, 41, 43, 44) miteinander verklebt sind.

## Claims

1. A filter insert (11) of cuboid design, composed of a sheet-like material (10) permeable to the medium to be filtered, arranged in a multiplicity of fold walls (15 to 22, 40, 41, 43, 44) arranged in a zigzag-shaped folding, for a medium to be filtered which passes through the filter insert (11) in the direction from one lower edge region (13) of the folding towards the opposite upper edge region (14) of the folding, with mutually parallel projections (30, 45) which protrude from each fold wall (15 to 22, 40, 41, 43, 44) in the direction of an adjacent fold wall and are produced by embossing and of which the extension (length) in the direction from the lower to the upper edge portion (13, 14) is greater than their mean extension (width) perpendicular to this direction, adjacent projections (30, 45) of mutually adjacent fold walls (15 to 22, 40, 41, 43, 44) bearing on one another in order to ensure a clearance and to stiffen the folds and the filter insert (11), and the height of the projections (30, 45) bearing on one another of two fold walls (15 to 22, 40, 41, 43, 44) connected to one another in the lower edge region (13) increasing in the direction of the upper edge region (14), and the height of the projections (30, 45) bearing on one another in the upper edge region (14) of fold walls (15 to 22, 40, 41, 43, 44) connected to one another increasing likewise in the direction of the lower edge region (13), and a clearance which decreases from the lower to the upper edge region or in the opposite direction being thus determined alternately between adjacent fold walls (15 to 22, 40, 41, 43, 44), characterised in that the width of the projections (30, 45) is essentially constant over the entire length, and in that, in the lower and in the upper edge region (13, 14) in each case, fold walls (15 to 22, 40, 41, 43, 44) connected to one another are connected to one another via an intermediate region (23 to 29, 35, 46) making the fold edges plane.

2. A filter insert according to claim 1, characterized in that the end faces (39) at those ends of the projections (30, 45) where these have the smaller height relative to the plane of the fold wall (15 to 22, 40, 41, 43, 44) have recesses of the filter material.

3. A filter insert according to claim 1, characterized in that the end faces (39) at those ends of the projections (30, 45) where these have the smaller height relative to the plane of the fold wall (15 to 22, 40, 41, 43, 44) are designed as faces formed at least partially from the filter material.

4. A filter insert according to any of claims 2 or 3, characterized in that the end faces (39) are essentially perpendicular to the plane of the fold wall (15 to 22, 40, 41, 43, 44).

5. A filter insert according to any of claims 2 or 3, characterized in that the end faces (39) meet the plane of the fold wall (15 to 22, 40, 41, 43, 44) underneath the projections (30, 45) in a manner essentially bevelled or rounded at an angle of less than 90° to the plane of the fold wall.

6. A filter insert according to any of claims 1 to 5, characterized in that the projections (30, 45) adjacent to one another in the direction of the edge regions protrude in each case alternately from the opposite surface of each fold wall (15 to 22, 40, 41, 43, 44).

7. A filter insert according to any of the preceding claims, characterized in that the width of the projections (30, 45) is greater than their maximum height relative to the plane of the fold wall (15 to 22, 40, 41, 43, 44).

8. A filter insert according to any of the preceding claims, characterized in that the side walls (300) of the projections (30, 45) extend perpendicularly to the fold edges (23 to 29, 35, 46) connecting the fold walls (15 to 22, 40, 41, 43, 44) to one another.

9. A filter insert according to any of the preceding claims, characterized in that the region of the transition (36), at those ends of the projections (30, 45) where these have the greater height relative to the plane of the fold wall (15 to 22, 40, 41, 43, 44), into the plane of the respective fold wall (15 to 22, 40, 41, 43, 44) is designed in such a way that a region of higher gradient is arranged between regions of lower gradient, the regions of lower gradient merging continuously into the contiguous regions of the covering surface of the projections (30, 45) or of the fold wall.

10. A filter insert according to any of the preceding claims, characterized in that the projections (30, 45) of mutually adjacent fold walls (15 to 22, 40, 41, 43, 44) are linearly contiguous with one another, adhesive being applied in the region of these lines.

11. A filter insert according to any of the preceding claims, characterized by a curable coating (38) and/or impregnation (38) stiffening the projections (30, 45), the coating (38) or impregnation (38) extending especially onto the side walls (300) of the projections (30, 45) and/or the local thickness of the coating thickness or the intensity of the impregnation increasing with the height of the projections (30, 45) relative to the plane of the fold wall (15 to 22, 40, 41, 43, 44).

12. A filter insert according to claim 1, characterized in that the coating (38) or impregnation (38) consists of an adhesive material, particularly the mutually confronting projections (30, 45) of mutually adjacent fold walls (15 to 22, 40, 41, 43, 44) being adhesively bonded with one another.

## Revendications

1. Garniture de filtre (11) de forme parallélépipédique, se composant d'une matière en feuille (10), perméable pour le milieu à filtrer et disposée dans un grand nombre de parois de plis ( 15 à 22, 40, 41, 43, 44) formées par un pliage en zigzag, pour un milieu à filtrer traversant la garniture de filtre (11) en direction d'une zone inférieure de bordure (13) du pliage et en direction de la zone supérieure de bordure opposée (14) du pliage, en comportant des saillies mutuellement parallèles (30, 45), produites par matriçage, dépassant de chaque paroi de pli (15 à 22, 40, 41, 43, 44) en direction d'une paroi de pli adjacente et dont la dimension (longueur) dans une direction s'étendant de la partie inférieure à la partie supérieure de bordure (13, 14) est plus grande que sa dimension moyenne (largeur) perpendiculairement à cette direction,
des saillies adjacentes (30, 45) des parois de plis mutuellement adjacentes (15 à 22, 40, 41, 43, 44) s'appliquant les unes contre les autres en vue d'une fixation d'espacement et d'un renforcement des plis et de la garniture de filtre (11) et la hauteur des saillies s'appliquant les unes contre les autres (30, 45) sur deux parois de plis (15 à 22, 40, 41, 43, 44), reliées entre elles dans une zone inférieure de bordure (13), augmente en direction de la zone supérieure de bordure (14) tandis que la hauteur des saillies s'appliquant les unes contre les autres (30, 45) dans une zone supérieure de bordure (14) de parois de plis (15 à 22, 40, 41, 43, 44), reliées entre elles dans une zone supérieure de bordure (14), augmente de la même façon en direction de la zone inférieure de bordure (13) et ainsi l'espacement, entre des parois de plis adjacentes (15 à 22, 40, 41, 43, 44), qui diminue alternativement de la zone inférieure de bordure à la zone supérieure de bordure ou bien dans le sens inverse, est maintenu,
caractérisée en ce que
la largeur des saillies (30, 45) est sensiblement constante sur toute la longueur et
des parois de plis reliées entre elles (15 à 22, 40, 41, 43, 44) respectivement dans la zone inférieure de bordure et dans la zone supérieure de bordure (13, 14), sont reliées les unes aux autres par l'intermédiaire d'une zone intercalaire (23 à 29, 35, 46) assurant la planéité des bords de plis.

2. Garniture de filtre selon la revendication 1, caractérisée en ce que les côtés frontaux (39), situés aux extrémités des saillies (30, 45) où celles-ci prennent la plus petite hauteur par rapport au plan de la paroi de pli (15 à 22, 40, 41, 43, 44), comportent des évidements formés dans la matière de filtre.

3. Garniture de filtre selon la revendication 1, caractérisée en ce que les côtés frontaux (39), situés aux extrémités des saillies (30, 45) où celles-ci prennent la plus petite hauteur par rapport au plan de la paroi de pli (15 à 22, 40, 41, 43, 44), sont agencés comme des surfaces formées en partie de la matière de filtre.

4. Garniture de filtre selon une des revendications 2 ou 3, caractérisée en ce que les côtés frontaux (39) sont orientés sensiblement perpendiculairement au plan de la paroi de pli (15 à 22, 40, 41, 43, 44).

5. Garniture de filtre selon une des revendications 2 ou 3, caractérisée en ce que les côtés frontaux (39) rejoignent, en-dessous des saillies (30, 45), le plan de la paroi de pli (15 à 22, 40, 41, 43, 44) en étant sensiblement biseautés ou arrondis avec un angle inférieur à 90° par rapport au plan de la paroi de pli.

6. Garniture de filtre selon une des revendications 1 à 5, caractérisée en ce que les saillies (30, 45) mutuellement adjacentes en direction des zones de bordures dépassent respectivement et en alternance de la surface opposée de chaque paroi de pli (15 à 22, 40, 41, 43, 44).

7. Garniture de filtre selon une des revendications précédentes, caractérisée en ce que la largeur des saillies (30, 45) est plus grande que leur hauteur maximale, par rapport au plan de la paroi de pli (15 à 22, 40, 41, 43, 44).

8. Garniture de filtre selon une des revendications précédentes, caractérisée en ce que les parois latérales (300) des saillies (30, 45) s'étendent perpendiculairement aux bords de plis (23 à 29, 35, 46) reliant entre elles les parois de plis (15 à 22, 40, 41, 43, 44).

9. Garniture de filtre selon une des revendications précédentes, caractérisée en ce que la zone de transition (36) située aux extrémités des saillies (30, 45) où celles-ci ont la plus grande hauteur, par rapport au plan de la paroi de plis (15 à 22, 40, 41, 43, 44) est agencée, dans le plan de la paroi de pli correspondante (15 à 22, 40, 41, 43, 44) de telle sorte qu'une zone de grande pente soit disposée entre des zones de petite pente, les zones de petite pente rejoignant de façon continue les zones adjacentes de la surface supérieure des saillies (30, 45) respectivement de la paroi de pli.

10. Garniture de filtre selon une des revendications précédentes, caractérisée en ce que les saillies (30, 45) de parois de plis mutuellement adjacentes (15 à 22, 40, 41, 43, 44) ont des délimitations mutuelles sous forme de lignes, de l'adhésif étant déposé dans la zone desdites lignes.

11. Garniture de filtre selon une des revendications précédentes, caractérisée par un revêtement (38) et/ou une imprégnation (38), durcissable et renforçant les saillies (30, 45), le revêtement (38) ou l'imprégnation (38) s'étendant notamment sur les parois latérales (300) des saillies (30, 45) et/ou l'épaisseur locale du revêtement ou bien la densité de l'imprégnation augmentant avec la hauteur des saillies (30, 45), par rapport au plan de la paroi de pli (15 à 22, 40, 41, 43, 44).

12. Garniture de filtre selon la revendication 1, caractérisée en ce que le revêtement (38) ou l'imprégnation (38) se compose d'une matière adhésive, notamment les saillies dirigées l'une vers l'autre (30, 45) sur deux parois de plis mutuellement adjacentes (15 à 22, 40, 41, 43, 44) étant collées les unes avec les autres.
